# FASCICULE DE BREVET EUROPEEN

(11) **EP 4 162 576 B1**
(45) Date de publication et mention de la délivrance du brevet: **25.02.2026**
(21) Numéro de dépôt: 21729336.4
(22) Date de dépôt: 02.06.2021
(51) Int. Cl.: H02B 13/045, H02B 13/065, H02G 5/06

(54) **DISPOSITIF DE CONFINEMENT D'UNE FUITE DE GAZ AU NIVEAU DE L'INTERFACE ENTRE UN CONE ISOLANT OU UN JOINT PLAT ET UNE BRIDE**
VORRICHTUNG ZUM EINSCHLIESSEN VON GASLECKS FÜR EINE SCHNITTSTELLE ZWISCHEN EINEM ISOLIERKONUS ODER EINER FLACHDICHTUNG UND EINEM FLANSCH
DEVICE FOR CONTAINING A GAS LEAK AT THE INTERFACE BETWEEN AN INSULATING CONE OR A SEALING GASKET AND A FLANGE

(30) Priorité: 03.06.2020 FR 2005792
(43) Date de publication de la demande: 12.04.2023
(73) Titulaire: Ircamex, 44300 Nantes (FR)
(72) Inventeur: CHARON, Romain, 44300 NANTES (FR)
(74) Mandataire: Ermeneux, Bertrand
(86) Numéro de dépôt international: PCT/EP2021/064890
(87) Numéro de publication internationale: WO 2021/245183

(56) Documents cités:
- WO-A1-2013/149749
- WO-A1-2017/162660
- FR-A1- 3 043 267
- JP-A- 2005 269 684
- US-A1- 2014 311 583

## Description

### 1. Domaine de l'invention

Le domaine de l'invention est celui des installations renfermant un gaz sous pression.

Plus précisément, l'invention concerne un dispositif de confinement d'une fuite d'un gaz au niveau de l'interface entre une pièce intermédiaire, telle qu'un cône isolant ou un joint plat, enserrée entre deux brides, et l'une de ces brides.

L'invention trouve notamment une application pour des postes électriques sous enveloppe métallique, aussi appelés postes blindés, et plus généralement pour des portions de tuyauterie destinées à contenir un gaz sous pression équipés d'un cône isolant, et pour des conduites de gaz naturel.

### 2. Etat de la technique

Les postes électriques sous enveloppe métallique (aussi désignés par l'acronyme GIS pour « Gas Insulated Switchgear » en anglais), sont constitués d'un assemblage de compartiments indépendants contenant un gaz isolant sous pression, le plus souvent du SF6.

Chaque compartiment est relié au suivant au moyen de brides d'assemblage entre lesquelles on intercale un cône d'isolation destiné à soutenir les conducteurs électriques montés à l'intérieur des compartiments.

Avec le vieillissement des postes blindés, on constate une apparition progressive de fuites de gaz isolant au niveau des brides d'assemblage de compartiments et entre autres aux interfaces entre les cônes isolants et les brides.

Outre le fort impact que ces fuites ont sur l'effet de serre, il résulte de ces fuites une baisse de la pression interne dans les compartiments du poste blindé, qui si elle atteint un seuil minimal de pression entraine une mise en sécurité des compartiments.

Cette mise en sécurité des compartiments provoque une coupure du réseau, ce qui est très pénalisant pour l'exploitation d'un poste blindé.

C'est pourquoi actuellement des opérations de maintenance sont réalisées régulièrement sur les compartiments des postes blindés, afin de surveiller et de compenser les éventuelles baisses de pression ou de réduire les fuites, dans le but d'éviter un risque de coupure électrique. Ces opérations de maintenance permanentes représentent à la fin de l'année une dépense importante pour l'exploitant du poste blindé.

Pour tenter de remédier au problème d'étanchéité des compartiments de postes blindés, on a proposé de colmater les points d'amorce de fuite avec de la pâte d'étanchéité ou des résines.

Un inconvénient de cette technique de colmatage est que la pâte ou la résine doit être appliquée régulièrement et avec précision autour des brides ce qui est d'autant plus complexe, long et fastidieux que le contour des brides peut être au moins en partie peu accessible.

Un autre inconvénient de cette technique connue est que l'application doit être renouvelée régulièrement.

Il existe par ailleurs un risque de détérioration du cône isolant lors d'une opération de colmatage.

Enfin, une opération de colmatage sur un compartiment de poste blindé peut présenter un risque pour les personnels qui interviennent sur le poste blindé du fait des phénomènes d'induction.

On connait du document WO2013/149749 A1 un capot étanche formé de deux coques demi-cylindriques qui se monte autour des brides d'assemblage de deux tubes contenant un gaz sous pression, et qui permet de confiner des fuites de gaz se produisant au niveau de la jonction entre les brides. On connait également du document FR3 043 267 A1 un capot du même type adapté pour se monter autour de brides connectant des tubes de diamètres différents.

On connait du document US2014/0311583 A1 un dispositif permettant de démonter des brides sans rejeter de gaz dans l'atmosphère. Ce dispositif formé de deux demi-coques cylindriques articulées entre elles se pose autour des brides et présente un orifice sur lequel on vient connecter une pompe à vide qui permet de recueillir le gaz qui s'échappe lorsqu'on desserre les brides.

On connait du document WO 2017/162660 A1 un raccord étanche de forme annulaire permettant de connecter deux enveloppes d'un appareil électrique isolé au gaz. On connaît aussi le document JP2005269684A qui divulgue un raccord similaire.

### 1. Objectifs de l'invention

L'invention a donc notamment pour objectif de pallier les inconvénients de l'état de la technique cités ci-dessus.

Plus précisément l'invention a pour objectif de fournir une technique de confinement d'une fuite de gaz qui soit efficace et d'un coût de revient réduit. Un objectif de l'invention est également de fournir une telle technique qui soit simple à mettre en œuvre.

L'invention a encore pour objectif de fournir une technique de confinement d'une fuite de gaz au niveau de l'interface entre une pièce intermédiaire et une bride qui préserve l'état de la pièce intermédiaire.

Un autre objectif de l'invention est de fournir une telle technique qui soit sans danger pour des opérateurs intervenant sur ou à proximité de la zone où est apparue la fuite.

### 4. Exposé de l'invention

Ces objectifs, ainsi que d'autres qui apparaitront par la suite sont atteints à l'aide d'un dispositif de confinement selon la revendication 1.

L'invention propose ainsi de recouvrir une majeure partie de la tranche de la pièce intermédiaire par une bande de cerclage pour le collecter dans le logement interne de l'enceinte de collecte.

En outre, l'étanchéité du dispositif de confinement est assurée par un cordon appliqué à la fois sur la bande annulaire de cerclage, les brides et la portion inférieure du collecteur, qui est simple et rapide à mettre en œuvre et, dans le cas où un démontage du dispositif est requis, est aisé à détacher des brides.

Enfin grâce aux moyens d'obturation amovible, qui peuvent être retirés lors de l'application du cordon d'étanchéité, le gaz peut s'échapper par la lumière lors du durcissement du cordon, ce qui évite que du gaz puisse ouvrir un passage au travers du cordon en cours de durcissement et rende le dispositif de confinement inefficient.

Il convient de noter que, dans le cadre de l'invention, l'enceinte de collecte de gaz peut être solidarisée aux moyens de cerclage par collage, par soudage ou par toute autre technique de solidarisation connue. Par ailleurs, l'enceinte de collecte peut s'étendre sensiblement en vis-à-vis du fermoir et également sur une partie substantielle du pourtour de la pièce intermédiaire, sans sortir du cadre de l'invention.

Selon un mode de réalisation avantageux de l'invention, ladite bande annulaire de cerclage est une bande ouverte présentant une première et une deuxième extrémité, en ce que lesdits moyens de cerclage comprennent un fermoir reliant ladite première et ladite deuxième extrémité et en ce que ledit logement interne est apte à recevoir au moins partiellement ledit fermoir

La sortie du gaz est ainsi limitée à la zone de jonction entre les deux extrémités de la bande de cerclage, qui sont maintenues rapprochées par le fermoir.

Dans un mode de réalisation avantageux de l'invention, un dispositif de confinement tel que décrit ci-dessous comprend une première bande annulaire déformable et une deuxième bande annulaire déformable destinée à être montés respectivement sur ladite première bride et sur ladite deuxième bride, ou à cheval sur ladite première bride et sur ladite pièce intermédiaire et à cheval sur ladite pièce intermédiaire et ladite deuxième bride, et ladite bande annulaire de cerclage étant montée sur ladite première bande annulaire déformable et ladite deuxième bande annulaire déformable et serre ladite première bande annulaire déformable contre la tranche de ladite première bride, ou contre la tranche de la première bride et le bord extérieur de ladite pièce intermédiaire, et ladite deuxième bande annulaire déformable contre la tranche de ladite deuxième bride, ou contre la tranche de la deuxième bride et le bord extérieur de ladite pièce intermédiaire.

En intercalant des bandes annulaires déformables protectrices entre la pièce intermédiaire et les moyens de cerclage, on évite ainsi que la surface de la pièce intermédiaire soit détériorée et on crée un guide vers l'enceinte de collecte pour le gaz.

Il convient de noter que pour confiner des fuites dans le plan de joint entre la pièce intermédiaire et une bride, on positionnera les bandes annulaires déformables uniquement sur les brides, de préférence au bord de la pièce intermédiaire, et pour confiner des fuites au niveau d'un orifice de reprise de fuite, on positionnera les bandes annulaires déformables à cheval sur la pièce intermédiaire et un bride.

De façon avantageuse, ladite première bande annulaire déformable et ladite deuxième bande annulaire déformable sont en un matériau souple ou semi-rigide.

Il peut notamment s'agir de bandes annulaires en EPDM (acronyme de éthylène-propylène-diène monomère).

Selon un aspect particulier de l'invention, ledit fermoir est une grenouillère.

Dans une variante de ce mode de réalisation, il peut être envisagé que le fermoir soit un fermoir de type vis-crémaillère, tel qu'employé pour les colliers de serrage à bande non perforée ou comprenne un tourillon, lesdits moyens de cerclage formant un collier à tourillon.

Selon l'invention, ledit cordon est formé de résine, de préférence de résine polyuréthane bi-composant, de tissu enduit de résine ou en matériau thermoformable, thermorétratable ou électroformable.

De façon préférentielle, l'épaisseur dudit cordon est comprise entre 2 et 15 millimètres.

De façon avantageuse, un dispositif de confinement tel que décrit ci-dessus comprend un capot enveloppant ladite enceinte et ledit cordon d'étanchéité et des moyens de fixation dudit capot auxdites brides.

On protège ainsi l'enceinte et le cordon d'étanchéité des ultra-violets, du sel ou de la pollution et on limite les risques de corrosion de l'enceinte.

Selon l'invention, ladite enceinte de collecte présente une lumière débouchant d'une part dans ledit logement intérieur d'autre part à l'extérieur dudit collecteur dans sa portion supérieure et des moyens d'obturation amovible de ladite lumière.

Selon un aspect avantageux de l'invention, lesdits moyens d'obturation amovible de ladite lumière comprennent des moyens de soutirage du gaz stocké dans le logement de l'enceinte.

On peut ainsi récupérer ce gaz, lorsque son rejet à l'atmosphère n'est pas autorisé, comme c'est le cas par exemple du SF₆.

Selon un mode de réalisation particulier de l'invention, ladite première bride et ladite deuxième bride ayant des diamètres extérieurs différents, les épaisseurs radiales de ladite première bande annulaire déformable et de ladite deuxième bande annulaire déformable sont adaptées de sorte que le diamètre extérieur de ladite première bande annulaire déformable soit identique au diamètre extérieur de ladite deuxième bande annulaire déformable.

On prévoit ainsi des bandes annulaires déformables d'épaisseurs différentes pour compenser la différence de diamètre extérieur entre les deux brides.

Dans un mode de réalisation particulier de l'invention, lesdites première et deuxième brides sont des brides d'assemblage de deux compartiments d'un poste électrique sous enveloppe métallique et en ce que ladite pièce intermédiaire est un cône isolant.

Dans un mode de réalisation particulier de l'invention, lesdits moyens de cerclage et ladite enceinte de collecte sont formés monobloc.

Dans un mode de réalisation particulier de l'invention, ladite enceinte de collecte est fixée audit orifice de reprise de fuite.

### 5. Liste des figures

D'autres caractéristiques et avantages de l'invention apparaitront plus clairement à la lecture de la description suivante de deux modes de réalisation de l'invention, donnés à titre de simples exemples illustratifs et non limitatifs, et des dessins annexés parmi lesquels :
- la figure 1 est une vue en perspective d'un exemple de mode de réalisation d'un dispositif de confinement d'une fuite d'un gaz selon l'invention monté sur la périphérie de deux brides d'assemblage de compartiments d'un poste électrique sous enveloppe métallique, qui enserrent un cône isolant, auquel on a retiré son capot ;
- la figure 2 est une vue en coupe transverse du dispositif de confinement présenté en référence à la figure 1 ;
- la figure 3 est une vue en coupe sagittale du dispositif de confinement présenté en référence à la figure 1 ;
- la figure 4 est une vue en perspective du dispositif de confinement présenté en référence à la figure 1 équipé de son capot ;
- la figure 5 est une vue en coupe transversale d'un autre exemple de mode de réalisation d'un dispositif de confinement d'une fuite d'un gaz au niveau de la sortie d'un orifice de reprise de gaz formé dans un cône isolant selon l'invention ;
- la figure 6 est une vue en coupe transversale d'une variante du dispositif de confinement présenté en référence à la figure 5 ;
- la figure 7 est une vue en perspective d'un troisième exemple de mode de réalisation d'un dispositif de confinement d'une fuite d'un gaz dans lequel la bande de cerclage et l'enceinte de collecte sont formés monobloc ;
- la figure 8 est une vue en coupe transversale du dispositif présenté en référence à la figure 7, réalisée au niveau de l'enceinte de collecte du gaz.

### 6. Description détaillée de l'invention

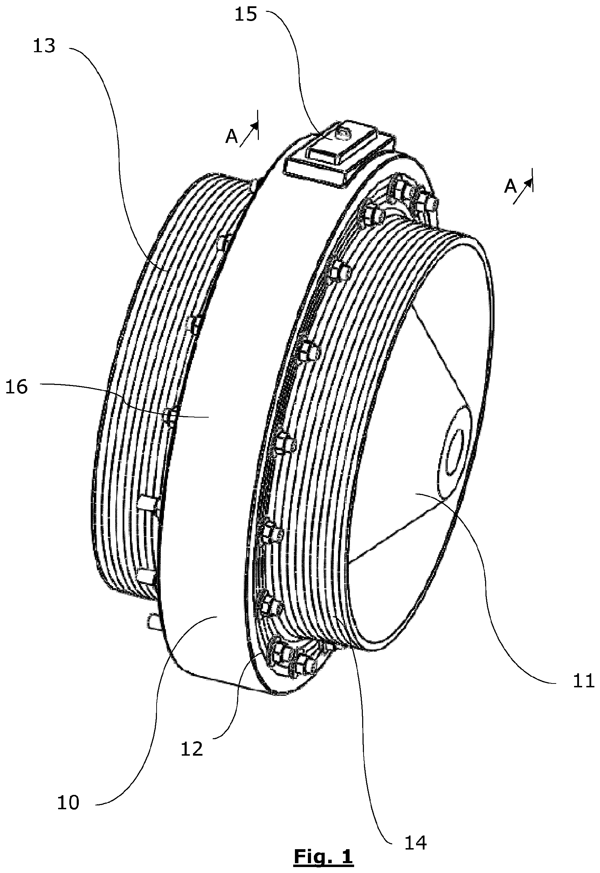

On a illustré sur la figure 1, un exemple de mode de réalisation d'un dispositif 10 de confinement d'une fuite de gaz selon l'invention, dans une vue en perspective, sans capot de protection.

Le dispositif 10 est monté sur la périphérie d'une première bride circulaire 21 (non visible sur la figure 1) et d'une deuxième bride circulaire 12 boulonnées ensemble pour assembler deux compartiments 13 et 14 d'un poste électrique sous enveloppe métallique.

Ce dispositif 10 recouvre la tranche de la première bride 21 et de la deuxième bride 12 et la tranche d'un cône isolant 11 enserré entre les deux brides 21 et 12, et de même diamètre extérieur que les brides 21 et 12, dont on distingue la pointe sur la figure 1.

On peut voir sur la figure 1 la tête d'une enceinte 15 de collecte de gaz émergeant du cordon de polyuréthane bi-composant 16 de 10 millimètres d'épaisseur appliqué sur tout le pourtour de l'assemblage des brides 21, 12 et du cône isolant 11, et qui forme la couche extérieure du dispositif 10.

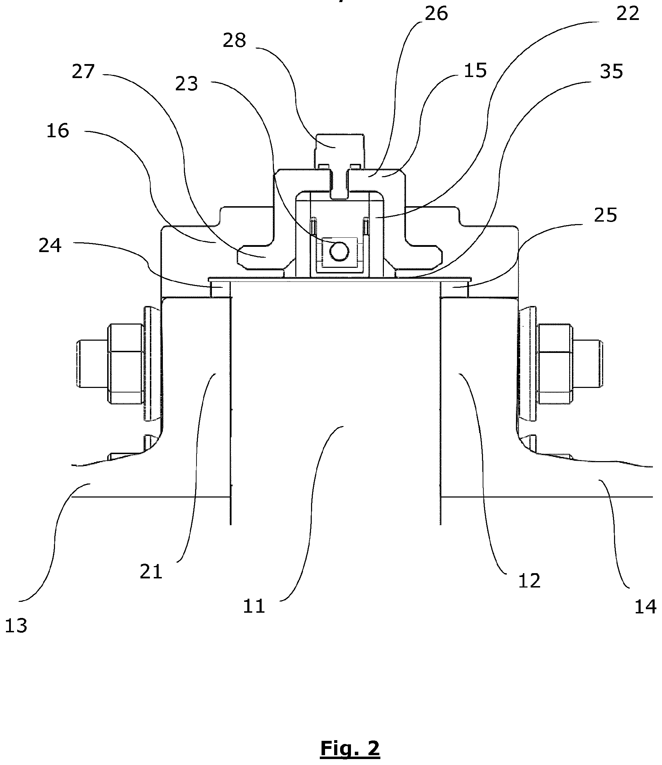

Comme on peut le voir sur la figure 2, dans une vue en coupe transversale A-A du dispositif 10 au niveau de la position de l'enceinte de collecte 15, l'enceinte de collecte 15 est formé dans ce mode de réalisation particulier de l'invention d'un corps fermé par un fond 26, qui délimite un logement interne 22 et présente une collerette 27 dans sa partie inférieure. Un trou a été par ailleurs taraudé dans le fond 26 de l'enceinte 15 pour permettre au gaz de s'échapper le temps que le cordon d'étanchéité 16 polymérise convenablement après son application. Ce trou a été obturé ensuite à l'aide d'une vis étanche 28, afin de retenir le gaz à l'intérieur du dispositif 10.

Le logement interne 22 de l'enceinte de collecte 16 accueille la partie supérieure d'une grenouillère 23.

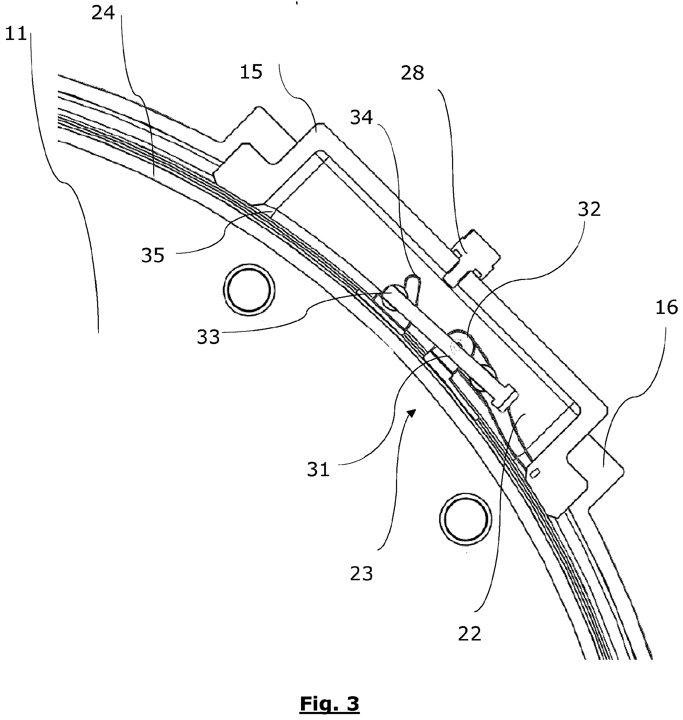

La figure 3 est une vue en coupe sagittale de la zone de l'enceinte de collecte, permettant de mieux distinguer les différentes pièces de la grenouillère 23. Celle-ci se compose d'un levier 31 monté pivotant autour de l'axe 32, dont l'extrémité proximale 33 est logée dans un crochet d'accrochage 34, ce qui permet de verrouiller les deux extrémités d'une bande annulaire ouverte de cerclage 35 découpée dans une feuille de clinquant et de fixer la bande de cerclage 35 aux brides 21 et 12.

Afin de ne pas détériorer le cône isolant 11, les bords latéraux de la bande annulaire ouverte 35 reposent sur une première bande annulaire déformable 24 et une deuxième bande annulaire déformable 25, montées respectivement sur la tranche de la première bride 21 et sur la tranche de la deuxième bride 12, au bord du cône isolant 11. Ces bandes de calage 24 et 25, tout en servant d'appuis à la bande annulaire ouverte 35, délimitent un volume supplémentaire de confinement du gaz entre le cône isolant et la bande de cerclage 35.

Le gaz fuyant des compartiments du poste électrique sous enveloppe métallique au travers de l'interface entre le cône isolant 11 et les brides 21 et 12 est ainsi dirigé vers la zone de la grenouillère 23, où il chemine entre les deux extrémités superposées de la bande de calage pour être recueilli dans le logement interne 22 de l'enceinte de collecte 15.

Dans ce mode de réalisation particulier de l'invention, les bandes annulaires 24 et 25 sont en EPDM.

Il convient de noter que dans ce mode de réalisation particulier de l'invention, la bande de cerclage 35 ne recouvre pas toute la largeur des bandes annulaires déformables 24 et 25. Ceci permet de garantir une diffusion convenable du cordon de polyuréthane 16 le long des bandes 24 et 25 et de la bande de cerclage 35 et d'augmenter la surface d'adhérence du cordon 35 avec les bandes annulaires 24 et 25.

Par ailleurs, l'enceinte de collecte 15 est dans ce mode de réalisation particulier de l'invention, fixé par collage à la bande de cerclage 35 grâce à un film de polyuréthane qui pénètre entre l'enceinte lors de l'application du cordon d'étanchéité 16.

La forme extérieure du cordon d'étanchéité 16 illustrée sur les figures 1 à 3 est celle de ce mode de réalisation particulier de l'invention. D'autres formes extérieures peuvent bien entendu être envisagées sans sortir du cadre de l'invention.

Dans une variante de ce mode de réalisation particulier de l'invention, il peut également être envisagé que le cordon d'étanchéité soit également appliqué sur les vis d'assemblage des brides 21 et 12.

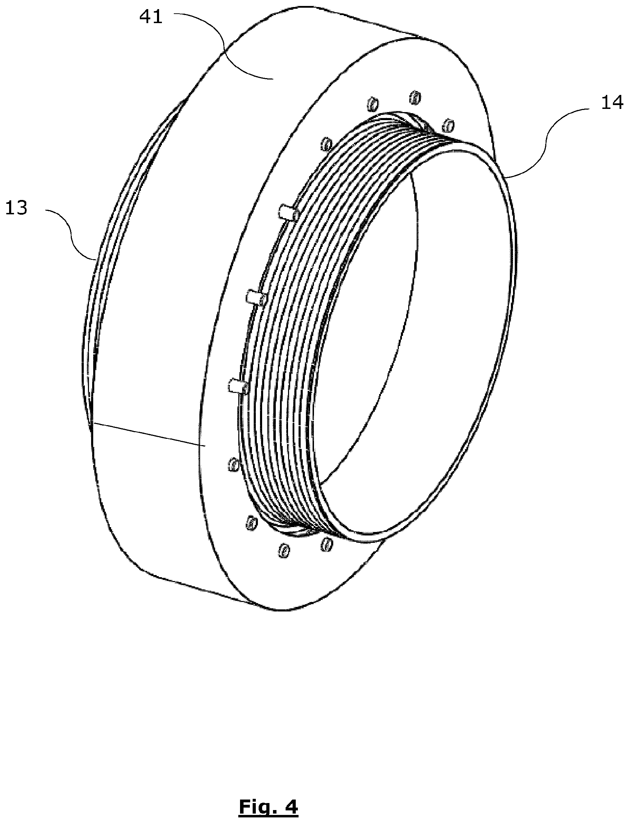

On a illustré sur la figure 4, le dispositif 10 équipé de son capot 41 dans une vue en perspective.

Ce capot 41 est formé de deux demi-coques qui se fixent, avec des écrous supplémentaires, sur les vis d'assemblage des brides 21 et 12. Il recouvre le cordon d'étanchéité 16 et l'enceinte de collecte 15 et les protège des ultraviolets, du sel et de la pollution.

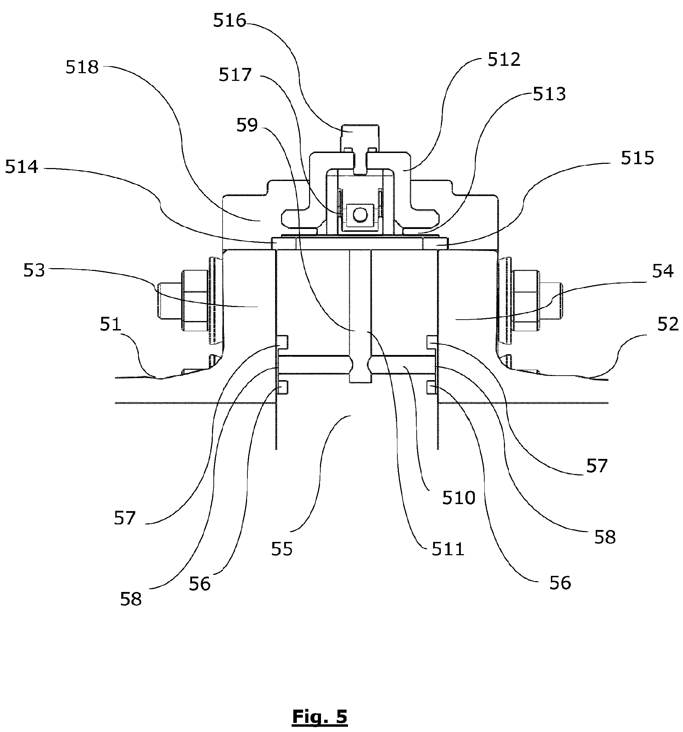

On a représenté sur la figure 5 une vue en coupe transverse d'un autre exemple de mode de réalisation d'un dispositif 50 de confinement selon l'invention.

Ce dispositif 50 est monté sur la périphérie de la zone d'assemblage de deux compartiments 51 et 52 d'un poste électrique sous enveloppe métallique et couvre deux brides d'assemblage 53 et 54 enserrant un cône isolant 55 pris en sandwich entre deux paires de joints coaxiaux 56 et 57.

Le joint interne 56 et le joint externe 57 de ces paire de joints coaxiaux sont séparés par un espace 58 en regard d'un orifice de reprise de fuite 59 percé dans le cône isolant 55. Cet orifice de reprise de fuite 59 est constitué d'un trou horizontal 510 qui débouche de chaque côté du cône isolant 55 dans l'un des espaces 58 et d'un trou vertical 511, sécant avec le trou 510, débouchant au niveau de la tranche du cône isolant 55. Il permet de collecter le gaz dans un première enceinte 512 du dispositif de confinement 50, lorsqu'une fuite apparait au niveau d'un joint interne 56.

Cette enceinte de collecte 512 est montée sur une bande de cerclage 513 fermée par une grenouillère 517, qui repose sur deux bandes annulaires déformables 514 et 515 dont elle assure le serrage contre la tranche des brides 53 et 54. Un bouchon étanche 516 est par ailleurs vissé dans la tête de cette enceinte 512.

Il convient de noter que dans ce mode de réalisation particulier de l'invention, les bandes annulaires déformables 514 et 515 sont montées respectivement à cheval sur la bride 53 et un bord du cône isolant 55 et à cheval sur l'autre bord du cône isolant et la bride 54, afin de bloquer le passage à une fuite qui apparaitrait au niveau d'un joint externe 57.

Afin de parfaire l'étanchéité, un cordon d'étanchéité 518 appliqué sur toute la périphérie des brides recouvre la tranche des brides 53 et 54, la bande de cerclage 513, le bord latéral extérieur et une partie de la face extérieure des bandes annulaires déformables 514 et 515 et la partie inférieure de l'enceinte de collecte 512.

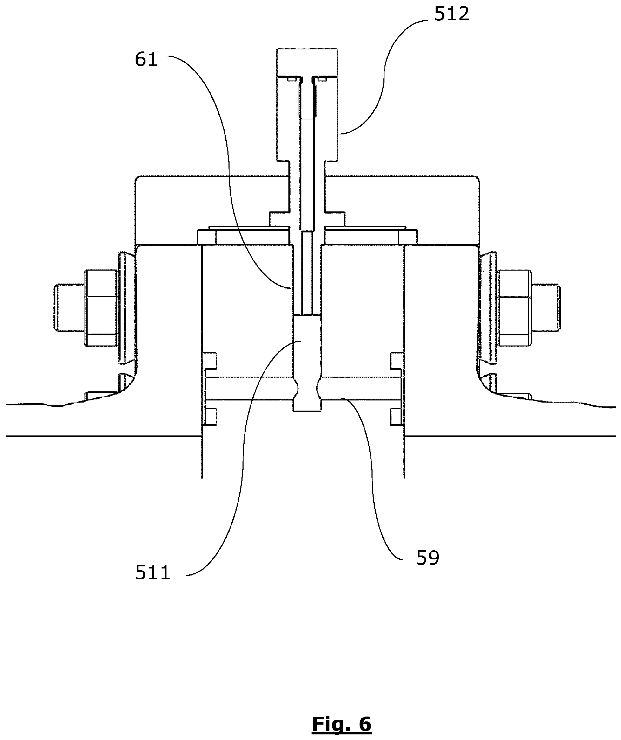

Dans une variante de ce mode de réalisation particulier de l'invention illustrée sur la figure 6, il peut également être prévu que la base 61 de l'enceinte de collecte 512 puisse être insérée dans le trou vertical 511 de l'orifice de reprise de fuite 59.

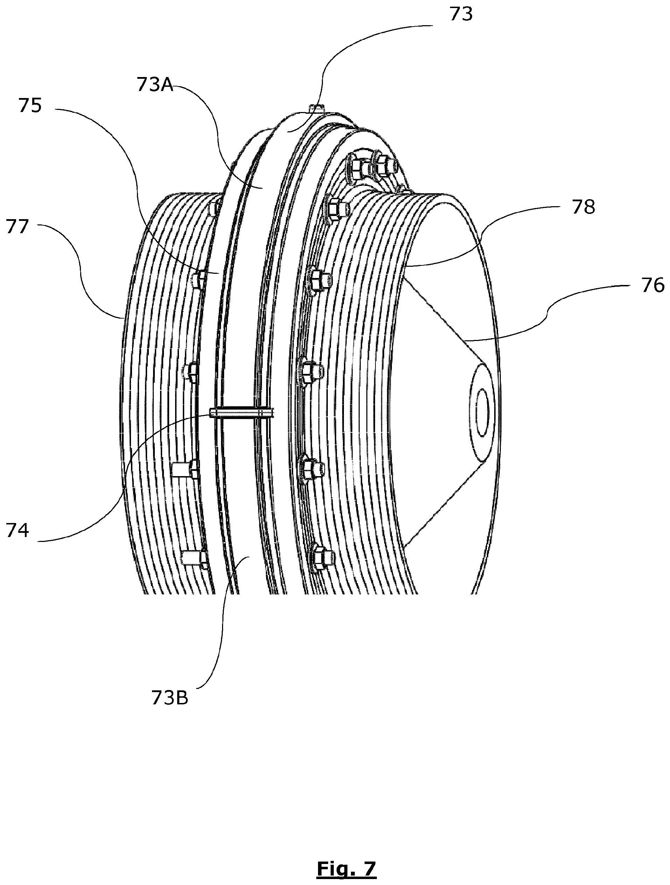

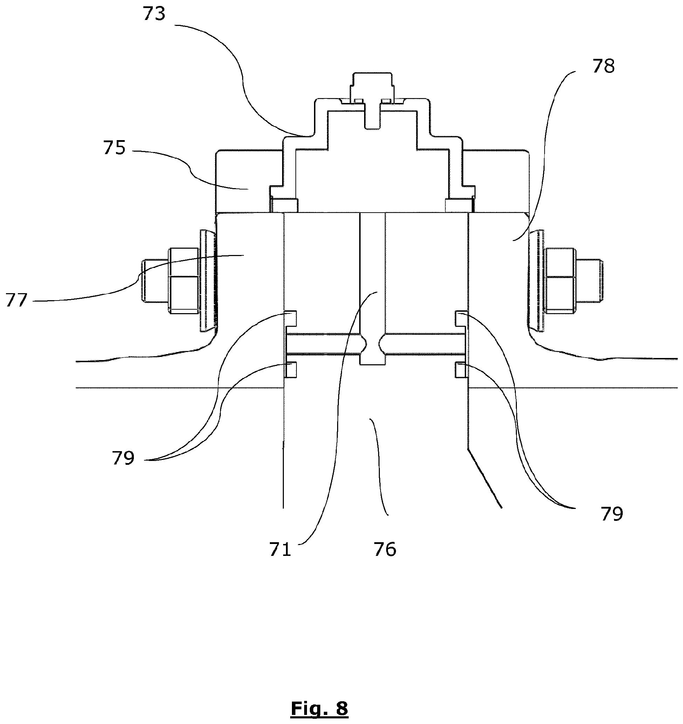

Les figures 7 et 8 sont une illustration d'une variante de mise en oeuvre d'un dispositif de confinement d'une fuite d'un gaz au niveau d'un orifice de reprise de fuite, dans une vue en perspective et dans une vue en coupe transverse.

Comme on peut le voir sur la figure 7, ce dispositif de confinement 70 selon l'invention comprend un collecteur de cerclage 73 recouvert d'un cordon d'étanchéité 75, formée de deux demi-collecteurs 73A et 73B en demi-cercle assemblés ensemble de façon étanche grâce à des pattes d'assemblage 74. Dans ce mode de réalisation particulier de l'invention, l'enceinte de collecte de gaz est formée monobloc avec le demi-collecteur 73A.

Ce dispositif 70 permet de confiner des fuites au niveau d'un orifice de reprise de fuite 71 formé dans un cône isolant 76 monté entre deux brides 77 et 78 entre lesquelles on a intercalé, de chaque côté du cône isolant, deux paires de joints coaxiaux 79.

## Revendications

1. Dispositif (10,50,70) de confinement d'une fuite d'un gaz au niveau d'une interface entre une pièce intermédiaire, telle qu'un cône isolant (11,55,76) ou un joint plat, et une première bride circulaire (21,53,77) ou au niveau d'un orifice de reprise de fuite (59,71) formé dans une pièce intermédiaire, ladite pièce intermédiaire étant enserrée entre ladite première bride circulaire (21,53) et une deuxième bride circulaire (12,54,78), comprenant :
- des moyens de cerclage d'une portion substantielle de la tranche de ladite pièce intermédiaire, comprenant une bande annulaire de cerclage (31,513,73) ;
- une enceinte de collecte (15,512) du gaz fuyant solidarisée auxdits moyens de cerclage, présentant un logement interne (22) et une lumière débouchant d'une part dans ledit logement intérieur (22) et d'autre part à l'extérieur dudit collecteur (15,512), au niveau de sa portion supérieure, et des moyens d'obturation amovible de ladite lumière ;
- un cordon d'étanchéité (16,518,75), ledit cordon (16,518,75) recouvrant au moins partiellement, sur tout le tour desdites brides (21,12,53,54,77,78), ladite bande annulaire de cerclage (31,513,73) et enveloppant au moins la portion inférieure externe dudit collecteur (15, 512),
**caractérisé en ce que**:
- le cordon d'étanchéité (16, 518, 75) est formé de résine, de préférence de résine polyuréthane bi-composant, de tissu enduit de résine ou en matériau thermoformable, thermorétratable ou électroformable,
- le cordon d'étanchéité (16, 518, 75) recouvre au moins partiellement, sur tout le tour des brides (21, 12, 53, 54, 77, 78), les tranches desdites brides.

2. Dispositif de confinement d'une fuite d'un gaz selon la revendication 1, **caractérisé en ce que** ladite bande annulaire de cerclage (31,513,73) est une bande ouverte présentant une première et une deuxième extrémité, **en ce que** lesdits moyens de cerclage comprennent un fermoir reliant ladite première et ladite deuxième extrémité et **en ce que** ledit logement interne (22) est apte à recevoir au moins partiellement ledit fermoir.

3. Dispositif de confinement d'une fuite d'un gaz selon l'une quelconque des revendications 1 et 2, **caractérisé en ce qu'**il comprend une première bande annulaire déformable (24,514) et une deuxième bande annulaire déformable (25,515) destinée à être montés respectivement sur ladite première bride (21,53) et sur ladite deuxième bride (12,54), ou à cheval sur ladite première bride (21,53) et sur ladite pièce intermédiaire et à cheval sur ladite pièce intermédiaire et ladite deuxième bride (12,54), et **en ce que** ladite bande annulaire de cerclage (31,513,73) est montée sur ladite première bande annulaire déformable (24,514) et ladite deuxième bande annulaire déformable (25,515) et serre ladite première bande annulaire déformable (24,514) contre la tranche de ladite première bride (21,53,77), ou contre la tranche de la première bride (21,513,77) et le bord extérieur de ladite pièce intermédiaire, et ladite deuxième bande annulaire déformable (25,515) contre la tranche de ladite deuxième bride (12,54,78), ou contre la tranche de la deuxième bride (12,54,78) et le bord extérieur de ladite pièce intermédiaire.

4. Dispositif de confinement d'une fuite d'un gaz selon la revendication 3, **caractérisé en ce que** ladite première bande annulaire déformable (24,514) et ladite deuxième bande annulaire déformable (25,515) sont en un matériau souple ou semi-rigide.

5. Dispositif selon la revendication 2, **caractérisé en ce que** ledit fermoir est une grenouillère (23,517).

6. Dispositif selon l'une quelconque des revendications 1 à 5, **caractérisé en ce que** l'épaisseur dudit cordon (16,518,75) est comprise entre 2 et 15 millimètres.

7. Dispositif selon l'une quelconque des revendications 1 à 6, **caractérisé en ce qu'**il comprend un capot (41) enveloppant ladite enceinte (15,512) et ledit cordon d'étanchéité (16,518,75) et des moyens de fixation dudit capot (41) auxdites brides (21,12,53,54,77,78).

8. Dispositif selon la revendication 1, **caractérisé en ce que** lesdits moyens d'obturation amovible de ladite lumière comprennent des moyens de soutirage du gaz stocké dans le logement de l'enceinte (15,512).

9. Dispositif selon la revendication 3, **caractérisé en ce que** ladite première bride (21,53,77) et ladite deuxième bride (12,54,78) ayant des diamètres extérieurs différents, les épaisseurs radiales de ladite première bande annulaire déformable (24,514) et de ladite deuxième bande annulaire déformable (25,515) sont adaptées de sorte que le diamètre extérieur de ladite première bande annulaire déformable (24,514) soit identique au diamètre extérieur de ladite deuxième bande \annulaire déformable (25,515).

10. Dispositif selon l'une quelconque des revendications 1 à 9, **caractérisé en ce que** lesdites première (21,53,77) et deuxième (12,54,78) brides sont des brides d'assemblage de deux compartiments (13,14,51,52) d'un poste électrique sous enveloppe métallique et **en ce que** ladite pièce intermédiaire est un cône isolant (11,55,76).

11. Dispositif selon l'une quelconque des revendications 1 à 10, **caractérisé en ce que** lesdits moyens de cerclage (73) et ladite enceinte de collecte (15,512) sont formés monobloc.

12. Dispositif selon l'une quelconque des revendications 1 à 11, **caractérisé en ce que** ladite enceinte de collecte (15,512) est fixée audit orifice de reprise de fuite (59,71).

## Patentansprüche

1. Vorrichtung (10, 50, 70) zum Einschluss eines Gaslecks an einer Schnittstelle zwischen einem Zwischenstück, wie zum Beispiel einem Isolierkegel (11, 55, 76) oder einer Flachdichtung, und einem ersten Ringflansch (21, 53, 77) oder an einer Entnahmeöffnung mit Leck (59, 71), die in einem Zwischenstück ausgebildet ist, wobei das Zwischenstück zwischen dem ersten Ringflansch (21, 53) und einem zweiten Ringflansch (12, 54, 78) umschlossen ist, umfassend:
- Mittel zum Ummanteln eines wesentlichen Abschnitts des Rands des Zwischenstücks, umfassend ein ringförmiges Ummantelungsband (31, 513, 73);
- einen abgeschlossenen Raum zum Sammeln (15, 512) des austretenden Gases, der mit den Mitteln zum Ummanteln fest verbunden ist, aufweisend eine interne Aufnahme (22) und einen Kanal, der einerseits in einem Teil in der inneren Aufnahme (22) und andererseits außerhalb des Sammlers (15, 512) auf Höhe seines oberen Bereichs mündet, und abnehmbare Verschlussmittel des Kanals;
- eine Dichtungsschnur (16, 518, 75), wobei die Schnur (16, 518, 75) die Flansche (21, 12, 53, 54, 77, 78) mindestens teilweise rundum bedeckt, das ringförmige Ummantelungsband (31, 513, 73) bedeckt, und mindestens den unteren äußeren Abschnitt des Sammlers (15, 512) umschließt,
**dadurch gekennzeichnet, dass**:
- die Dichtungsschnur (16, 518, 75) aus Harz, vorzugsweise aus Zweikomponenten-Polyurethanharz, harzbeschichtetem Gewebe oder wärmeformbarem, wärmeschrumpfendem oder galvanisch formbarem Material ausgebildet ist,
- die Dichtungsschnur (16, 518, 75) mindestens teilweise, besonders um die Flansche (21, 12, 53, 54, 77, 78) herum, die Ränder der Flansche bedeckt.

2. Vorrichtung zum Einschluss eines Gaslecks nach Anspruch 1,
**dadurch gekennzeichnet, dass** das ringförmige Ummantelungsband (31, 513, 73) ein offenes Band ist, aufweisend ein erstes und ein zweites Ende, und **dadurch, dass** die Mittel zum Ummanteln einen Schnapphalter, der das erste und das zweite Ende verbindet, umfassen, und **dadurch, dass** die innere Aufnahme (22) geeignet ist, den Schnapphalter mindestens teilweise aufzunehmen.

3. Vorrichtung zum Einschluss eines Gaslecks nach einem der Ansprüche 1 oder 2, **dadurch gekennzeichnet, dass** sie ein erstes verformbares ringförmiges Band (24, 514) und ein zweites verformbares ringförmiges Band (25, 515) umfasst, die dafür vorgesehen sind, jeweils an dem ersten Flansch (21, 53) und dem zweiten Flansch (12, 54), oder im Haftsitz auf dem ersten Flansch (21, 53) und dem Zwischenstück und im Haftsitz auf dem Zwischenstück und dem zweiten Flansch (12, 54) montiert zu werden, und **dadurch, dass** das ringförmige Ummantelungsband (31,513,73) auf dem ersten verformbaren ringförmigen Band (24, 514) und dem zweiten verformbaren ringförmigen Band (25, 515) montiert wird und das erste verformbare ringförmige Band (24, 514) gegen den Rand des ersten Flansches (21, 53, 77) oder gegen den Rand des ersten Flansches (21, 513, 77) und die Außenkante des Zwischenstücks, und das zweite verformbare ringförmige Band (25, 515) gegen den Rand des zweiten Flansches (12, 54, 78) oder gegen den Rand des zweiten Flansches (12, 54, 78) und die Außenkante des Zwischenstücks presst.

4. Vorrichtung zum Einschluss eines Gaslecks nach Anspruch 3,
**dadurch gekennzeichnet, dass** das erste verformbare ringförmige Band (24, 514) und das zweite verformbare ringförmige Band (25, 515) aus einem flexiblen oder halbstarren Material sind.

5. Vorrichtung nach Anspruch 2, **dadurch gekennzeichnet, dass** der Schnapphalter ein Schnallenverschluss (23, 517) ist.

6. Vorrichtung nach einem der Ansprüche 1 bis 5,
**dadurch gekennzeichnet, dass** Die Dicke der Schnur (16, 518, 75) zwischen 2 und 15 Millimeter liegt.

7. Vorrichtung nach einem der Ansprüche 1 bis 6,
**dadurch gekennzeichnet, dass** sie eine Haube (41), den abgeschlossenen Raum (15, 512) und die Dichtungsschnur (16, 518, 75) umschließt, und Befestigungsmittel der Haube (41) an den Flanschen (21, 12, 53, 54, 77, 78) umfasst.

8. Vorrichtung nach Anspruch 1, **dadurch gekennzeichnet, dass** die abnehmbaren Verschlussmittel des Kanals Mittel zum Absaugen des Gases, das in der Aufnahme des abgeschlossenen Raums (15, 512) gespeichert ist, umfassen.

9. Vorrichtung nach Anspruch 3, **dadurch gekennzeichnet, dass** der erste Flansch (21, 53, 77) und der zweite Flansch (12, 54, 78) unterschiedliche Außendurchmesser vorweisen, wobei die radialen Dicken des ersten verformbaren ringförmigen Bands (24, 514) und des zweiten verformbaren ringförmigen Bands (25,515) angepasst sind, sodass der Außendurchmesser des ersten verformbaren ringförmigen Bands (24, 514) mit dem Außendurchmesser des zweiten verformbaren ringförmigen Bands (25, 515) identisch ist.

10. Vorrichtung nach einem der Ansprüche 1 bis 9,
**dadurch gekennzeichnet, dass** der erste (21, 53, 77) und der zweite (12, 54, 78) Flansch Baugruppenflansche zweier Kammern (13, 14, 51, 52) eines Umspannwerks unter einer Metallhülle sind und **dadurch, dass** das Zwischenstück ein Isolierkegel (11,55,76) ist.

11. Vorrichtung nach einem der Ansprüche 1 bis 10,
**dadurch gekennzeichnet, dass** die Mittel zum Ummanteln (73) und der abgeschlossene Raum zum Sammeln (15, 512) einteilig ausgebildet sind.

12. Vorrichtung nach einem der Ansprüche 1 bis 11,
**dadurch gekennzeichnet, dass** der abgeschlossene Raum zum Sammeln (15, 512) an der Entnahmeöffnung mit Leck (59, 71) befestigt ist.

## Claims

1. Device (10,50,70) for containing a gas leak at an interface between an intermediate part, such as an insulating cone (11,55,76) or a sealing gasket, and a first circular flange (21,53,77) or at a leak-off orifice (59,71) formed in an intermediate part, said intermediate part being enclosed between said first circular flange (21,53) and a second circular flange (12,54,78), the device comprising:
- means for strapping a substantial portion of the edge of said intermediate part, the means comprising an annular strapping band (31,513,73);
- a chamber (15,512) for collecting the escaping gas, which chamber is rigidly connected to said strapping means and has an internal recess (22) and an opening leading into said internal recess (22) and to the exterior of said collector (15,512), at the upper portion thereof, and means for removably closing said opening;
- a sealing collar (16,518,75), said collar (16,518,75) at least partially covering said annular strapping band (31,513,73) all around said flanges (21,12,53,54,77,78) and surrounding at least the lower external portion of said collector (15, 512),
**characterized in that:**
- the sealing collar (16, 518, 75) is made of resin, preferably bi-component polyurethane resin, resin-coated fabric or thermoformable, heat-shrinkable or electroformable material,
- the sealing collar (16, 518, 75) at least partially covers the edges of said flanges all around the flanges (21, 12, 53, 54, 77, 78).

2. Device for containing a gas leak according to claim 1,
**characterized in that** said annular strapping band (31,513,73) is an open band having a first and a second end, **in that** said strapping means comprise a fastening that connects said first end and said second end and **in that** said internal recess (22) is capable of receiving said fastening at least in part.

3. Device for containing a gas leak according to either of claims 1 or 2, **characterized in that** it comprises a first deformable annular band (24,514) and a second deformable annular band (25,515) intended to be mounted respectively on said first flange (21,53) and on said second flange (12, 54), or to straddle said first flange (21, 53) and said intermediate part and to straddle said intermediate part and said second flange (12,54), and **in that** said annular strapping band (31,513,73) is mounted on said first deformable annular band (24,514) and said second deformable annular band (25,515) and clamps said first deformable annular band (24,514) against the edge of said first flange (21,53,77), or against the edge of the first flange (21,513,77) and the external rim of said intermediate part, and said second deformable annular band (25,515) against the edge of said second flange (12,54,78), or against the edge of the second flange (12,54,78) and the external rim of said intermediate part.

4. Device for containing a gas leak according to claim 3, **characterized in that** said first deformable annular band (24,514) and said second deformable annular band (25,515) are made of a non-rigid or semi-rigid material.

5. Device according to claim 2, **characterized in that** said fastening is a toggle latch (23,517).

6. Device according to any of claims 1 to 5, **characterized in that** the thickness of said collar (16,518,75) is between 2 and 15 millimeters.

7. Device according to any of claims 1 to 6, **characterized in that** it comprises a cover (41) surrounding said chamber (15,512) and said sealing collar (16,518,75) and means for fastening said cover (41) to said flanges (21,12,53,54,77,78).

8. Device according to claim 1, **characterized in that** said means for removably closing said opening comprise means for drawing off the gas stored in the recess of the chamber (15,512).

9. Device according to claim 3, **characterized in that,** with said first flange (21,53,77) and said second flange (12,54,78) having different external diameters, the radial thicknesses of said first deformable annular band (24,514) and of said second deformable annular band (25,515) are adapted so that the external diameter of said first deformable annular band (24,514) is identical to the external diameter of said second deformable annular band (25,515).

10. Device according to any of claims 1 to 9, **characterized in that** said first flange (21,53,77) and second flange (12,54,78) are flanges for assembling two compartments (13,14,51,52) of a metal-clad electrical substation, and **in that** said intermediate part is an insulating cone (11,55,76).

11. Device according to any of claims 1 to 10, **characterized in that** said strapping means (73) and said collection chamber (15,512) are formed as a single piece.

12. Device according to any of claims 1 to 11, **characterized in that** said collection chamber (15,512) is fastened to said leak-off orifice (59,71).
